# EUROPEAN PATENT SPECIFICATION

(11) **EP 2 874 714 B1**
(45) Date of publication and mention of the grant of the patent: **02.09.2020**
(21) Application number: 13819505.2
(22) Date of filing: 17.07.2013
(51) Int. Cl.: A62D 3/33

(54) **UNIVERSAL SURFACE DECONTAMINATION FORMULATION**
FORMULIERUNG FÜR UNIVERSELLE OBERFLÄCHENDEKONTAMINIERUNG
PRÉPARATION DE DÉCONTAMINATION DE SURFACE UNIVERSELLE

(30) Priority: 18.07.2012 CA 2783349; 16.10.2012 US 201213653283
(43) Date of publication of application: 27.05.2015
(73) Proprietor: Her Majesty The Queen In Right Of Canada As Represented By The Minister Of The Environment, Ottawa, Ontario K1A 0H3 (CA)
(72) Inventor: VOLCHEK, Konstantin, Nepean. Ontario K2E 7N6 (CA); AZMI, Pervez, Kanata, Ontario K2M 2Y3 (CA); KUANG, Wenxing, Gloucester, Ontario K1V 2G9 (CA); BROWN, Carl E., Orleans, Ontario K4A 3X1 (CA)
(74) Representative: Bergenstråhle Group AB
(86) International application number: PCT/CA2013/000647
(87) International publication number: WO 2014/012166

(56) References cited:
- WO-A1-01/76819
- US-A- 2 989 368
- US-A- 4 087 372
- US-A- 5 421 906
- US-A1- 2004 022 867
- US-B1- 6 558 552

## Description

### FIELD OF INVENTION

The present invention relates to decontamination formulations. More specifically, the present invention relates to decontamination formulations for chemical, biological, and/or radiological decontamination.

### BACKGROUND OF THE INVENTION

In view of the high degree of urbanization, the impact from an event resulting in the dispersal of harmful chemical, biological or radiological substances in populated or urban areas can be significant. In dealing with any contaminants, decontamination techniques and compositions need to be tailored to the nature of the contaminants and also the materials to be decontaminated.

Decontamination from chemical or biological agents often involves employing methods and compositions that alter or destroy the chemical structure of the chemical or biological agent rendering it non-toxic or less toxic. Thus, the strategy to decontaminate materials containing such agents is not applicable to other contamination problems, particularly contaminating agents which cannot be created or destroyed, such as heavy metals or radiological agents. Decontamination from these agents from surfaces can require different strategies and/or compositions from those described above.

In the event of an accidental release of radionuclides or in the event of terrorist attack, the isotopes of greatest concern would likely be ¹³⁴Cs, ¹³⁷Cs, ⁸⁵Sr, ⁹⁰Sr and ⁶⁰Co, that can be found in industrial radiography and irradiator sources, nuclear medical sources, and portable gauges. One possible method of decontaminating sites following radionuclide contamination is through mechanical decontamination, for example, removal of the surface that is contaminated with the radiological agent.

Many mechanical decontamination technologies involve aggressive methods such as blasting, cutting, surface removal and/or scrubbing. Although these techniques have proven effective in some instances, for example during the Chernobyl accident decontamination, due to their destructive nature, they may not be suitable for decontaminating various surfaces including buildings of historical importance. For such scenarios, chemical decontamination may be a better alternative. Among the wide variety of chemical methods used for the decontamination of radioactive metal ions from surfaces, chemical removal using compositions comprising binding agents that sequester the radionuclides is one widely used procedure. However, chemical methods may have drawbacks, including lack of non-specific binding to a variety of metal ions, as well as potentially promoting radionuclide mobility.

There are many decontamination compositions and techniques known in the art for decontaminating chemical, biological or radionuclide agents depending on the nature of the contaminating agent and the contaminated material. Examples of such compositions and techniques are described in US Patents 7,915,472; 8,070,881; 7,833,357; 7,390,432; 6,723,890; 6,566,574; 6,652,661; 6,525,237; 5,961,736; 2004/022867; 5,421,906; 6,558,552; 2,989,368 and 5,512,202. US 2,989,368 discloses a method of decontamination for caesium comprising water, ammonium nitrate, potassium ions and ferrocyanide ions

There is a need in the art for novel decontamination compositions and formulations. Further, there is a need in the art for universal decontamination compositions that are effective against radionuclide, chemical and biological agents simultaneously. This is particularly important when the nature of the threat (chemical, biological or radiological) is unknown. Also, when both radiological and chemical and/or biological agents are present, decontaminating with a single composition or in one step, as opposed to decontaminating with multiple compositions or in two or more steps, should simplify decontamination operations and reduce their overall cost and time.

### SUMMARY OF THE INVENTION

The present invention relates to decontamination formulations. More specifically, the present invention relates to decontamination formulations for chemical, biological, or radiological decontamination. The present invention further relates to formulations for simultaneous decontamination from chemical, biological, and radiological agents.

According to the present invention there is provided a decontamination composition according to claim 1 comprising an ammonium compound, a ferric cyanide compound, a polyaminocarboxylic acid compound and a polycarboxylic acid compound. The decontamination composition is an aqueous composition, which comprises ammonium nitrate, potassium ferricyanide, nitrilotriacetate and sodium citrate.

In the present invention, the decontamination composition as described above comprises 0.0001-15% by weight of the ammonium compound, 0.0001-15% by weight ferri/ferrocyanide compound, 0.0001-20% by weight polyaminocarboxylic acid, and 0.0001-20% by weight polycarboxylic acid compound. The ammonium compound is ammonium nitrate, the ferri/ferrocyanide compound is potassium ferricyanide, the polyaminocarboxylic acid compound is nitrilotriacetate and the polycarboxylic acid compound is sodium citrate.

The decontamination composition as described above, is a formulation for use foam.

The present invention also contemplates the decontamination composition as described above further comprising of one or more oxidizing agents, one or more surfactants, one or more buffering agents, propylene glycol, polyethylene glycol, derivatives of propylene glycol, derivatives of ethylene glycol, or any combination thereof.

The present invention further provides decontamination compositions as described above comprising a) ammonium ions; b) hexacyanoferrate, c) citrate, d) nitrilotriacetic acid, e) dichloroisocyanuric acid, f) carbonate, g) one or more surfactants comprising sodium myristeth sulfate, C14-C16 olefin sulfonate, denatured ethanol, or C10-C16 alcohols and h) polyethylene glycol or a derivative thereof. The hexacyanoferrate and/or the ferri/ferrocyanide compounds in decontamination compositions are not insoluble in water or aqueous solutions.

Also provided are kits according to claim 8 comprising, a) the decontamination composition of claim 1, and;
b) one or more mixers, pumps, hoses, containers, nozzles, and aerators.

### DETAILED DESCRIPTION

The following description is of a preferred embodiment.

The term "composition" and "formulation" are used interchangeably herein.

The present invention provides surface decontamination compositions/formulations for decontaminating surfaces from chemical, biological and radiological contaminants. In an embodiment, there is provided a decontamination composition according to claim 1 comprising an ammonium compound, a ferricyanide compound, a polyaminocarboxylic acid compound, and a polycarboxylic acid compound.

By "ammonium compound" it is meant ammonium nitrate.

By "ferri/ferrocyanide compound" it is meant potassium ferricyanide (K₃Fe(CN)₆).

By "polyaminocarboxylic acid compound" it is meant nitrilotriacetate salt. In a preferred embodiment, the polyaminocarboxylic acid is trisodium nitrilotriacetate.

By "polycarboxylic acid compound" it is meant the sodium salt of citric acid (sodium citrate), for example, mono-, di-, or trisodium citrate, combination thereof.

The ammonium compound comprises about 0.0001% to 15% by weight of the surface decontamination composition, more preferably about 0.001% to 15% (w/w), still more preferably about 0.01% to 15% (w/w), even more preferably about 1-15% (w/w). For example, but not to be considered limiting, the ammonium compound may be present in an amount of 1%, 2%, 3%, 4%, 5%, 6%, 7%, 8%, 9%, 10%, 11%, 12%, 13%, 14% or 15%.

The ferri/ferrocyanide compound comprises about 0.0001% to 15% by weight of the surface decontamination composition, more preferably about 0.001% to 15% (w/w), still more preferably about 0.01% to 15% (w/w).

The polyaminocarboxylic acid compound comprises about 0.0001% to 20% by weight of the surface decontamination composition, more preferably about 0.001% to 20% (w/w), still more preferably about 0.01% to 20% (w/w).

The polycarboxylic acid compound comprises about 0.0001 % to 20% by weight of the surface decontamination composition, more preferably about 0.001% to 20% (w/w), still more preferably about 0.01% to 20% (w/w).

The surface decontamination composition is formulated for use as a foam. Accordingly, the components of the surface decontamination composition as described herein and throughout may comprise a plurality of additional components as would be known in the art. In particular, the surface decontamination compositions as described herein may further comprise one or more additional components, or may be prepared or formulated, for example, as described in any of Canadian Patent: 2,300,698; US Patent: 6,525,237 or EP Patent 1,154,820 entitled "Broad Spectrum Decontamination Formulation and Method of Use" and Canadian Patent: 2,299,259 and US Patent: 6,405,626 entitled "Decontamination and Dispersal Suppressing Foam Formulation".

In a further embodiment of the present invention, which is not meant to be limiting in any manner, the composition comprises one or more oxidizing agents, such as, but not limited to an isocyanuric acid. Preferably the isocyanuric acid is an alkali metal salt of isocyanuric acid, for example, but not limited to sodium dichloroisocyanuric acid.

In examples wherein the decontamination composition comprises an isocyanuric acid, preferably it is present in an amount of from about 0.1% to 25% by weight, more preferably about 1% to about 20%, still more preferably about 2% to 10%. In a preferred embodiment, the present invention comprises the sodium salt of dichloroisocyanuric acid as this component is readily available from a variety of chemical suppliers.

As suggested above, the decontamination composition is aqueous, but a variety of additional solvents or co-solvents also may be included. Examples of additional solvents or co-solvents include, but are not limited to propylene glycol, polyethylene glycol, derivatives of propylene glycol, derivatives of ethylene glycol, or any combination thereof. When present, such solvents are generally present in an amount of from about 0.1 to about 20% by volume, more preferably 1% to 10%, for example, but not limited to 1%, 2%, 3%, 4%, 5%, 6%, 7%, 8%, 9%, or 10% by volume.

The decontamination composition also may comprise one or more surfactants In an embodiment of the present invention, the surfactant is present in an amount of from about 0.01% to about 20% by weight, more preferably about 1% to about 15% and still more preferably from about 1% to about 10%, for example, 1%, 2%, 3%, 4%, 5%, 6%, 7%, 8%, 9% or 10% by weight. Various surfactants may be used in the decontamination composition of the present invention, for example those described in US 6,525,237 and US 6,405,626. Other surfactants known in the art are also contemplated.

In an embodiment, the surfactant is provided as a surfactant component system, for example, comprising an alkyl ether sulphate salt, an alkyl alcohol, an alpha olefin sulfonate or a combination thereof, for example, but not limited to sodium myristeth sulfate, sodium C14-C16 olefin sulfonate, ethanol, denatured ethanol, long chain alcohols, for example, but not limited to C10-C16 alcohols, or a combination thereof.

According to a further embodiment, there is provided a surfactant component system that comprises sodium myristeth sulfate in an amount of about 1% to 40% by weight, more preferably about 5% to 35%, still more preferably about 10 to 30%, for example, but not limited to about 10%, 11%, 12%, 13%, 14%, 15%, 16%, 17%, 18%, 19%, 20%, 21%, 22%, 23%, 24%, 25%, 26%, 27%, 28%, 29% or 30%.

The decontamination composition may further comprise a C14-C16 olefin sulfonate, for example, sodium C14-C16 olefin sulfonate in an amount of about 1% to 40% by weight, more preferably about 5% to 35%, still more preferably about 10% to 30%, for example, but not limited to 10%, 11%, 12%, 13%, 14%, 15%, 16%, 17%, 18%, 19%, 20%, 21%, 22%, 23%, 24%, 25%, 26%, 27%, 28%, 29% or 30%.

The decontamination composition may further comprise ethanol or denatured ethanol in an amount of about 1% to about 20% by volume, more preferably about 2% to 15%, still more preferably about 3% to 9%, for example, but not limited to about 3%, 4%, 5%, 6%, 7%, 8% or 9%.

The decontamination composition may further comprise C10-C16 alcohols in an amount of about 1% to 20% by volume, more preferably about 2% to 15%, still more preferably about 5% to 10%, for example 5%, 6%, 7%, 8%, 9%, or 10%.

The decontamination composition may further comprise sodium sulfate in the amount of about 1% to 10% by weight, more preferably about 2% to 8%, still more preferably about 3% to 7% for example 3%, 4%, 5%, 6%, or 7%.

The decontamination composition may further comprise sodium xylene sulfate in the amount of about 0.1% to 10%, more preferably about 0.2% to 8%, still more preferably about 1% to 5% for example 1%, 2%, 3%, 4%, or 5%.

The decontamination composition may further comprise one or more buffers or buffer component systems, for example, but not limited to sodium tetraborate, sodium hydroxide, and sodium carbonate. Preferably the buffer system maintains an alkaline pH, more preferably around pH 8-12, still more preferably around10-11.

In an alternative embodiment, the decontamination compositions of the present invention may not comprise any significant buffering agents or buffer component systems. For example, the present invention includes decontamination compositions comprising ammonium nitrate, potassium hexacyanoferrate, sodium citrate and nitrilotriacetate which are formulated in water.

In still other embodiments, the compounds described above may be combined as a solid composition that can readily be mixed with other aqueous or liquid components to create the surface decontamination formulations as described herein.

The decontamination composition may further comprise one or more foaming agents, or corrosion inhibitors as would be known in the art.

In a further embodiment, the decontamination composition also comprises about 9% by weight sodium dichloroisocyanurate, a buffer mixture comprising about 0.0125M sodium tetraboratedecahydrate and about 0.1M anhydrous sodium carbonate adjusted to a pH from about 10 to 11, using NaOH, about 9% surfactant, and about 8% co-solvent.

In a further embodiment of the present invention, the decontamination composition also comprises about 6% by weight dichloroisocyanuric acid salt, an alkaline buffer, about 9% surfactant and about 8% co-solvent.

In a further embodiment of the present invention, the decontamination also comprises about 3% by weight dichloroisocyanuric acid salt, an alkaline buffer, and about 3% surfactant.

### Method of Application

The decontamination formulation is prepared in a foam form. Preferably the composition is prepared for dispersal as a foam using pressurized pumping equipment and/or aeration nozzles as would be known in the art.

### Kits

The present invention also contemplates kits according to claim 8 for preparing the decontamination compositions of the present invention. The kits may separately contain the individual components necessary to prepare the decontamination compositions or alternatively the kits may comprise two or more combinations of components necessary to prepare the decontamination compositions. The kits may also comprise mixing or dispersal systems, for example, one or more pumps, hoses, containers, nozzles, aerators, and the like, and instructions for preparing or using any component or combination of components that form part of the decontamination composition, or the decontamination composition itself.

One benefit of the surface decontamination composition described herein is that the components of the formulation are easy to mix and the final formulation can be made and be ready for use in little time as a foam. A further benefit of the surface decontamination composition, particularly when formulated into a foam, is that it is easily removed from surfaces by suction, rinsing or other means after decontaminating surfaces. The compositions as described herein also do not require special dispensing/application equipments and have good shelf/storage life when components of the composition are maintained in powder or separated form.

The decontamination formulations described herein are effective on single or multiple threat situations, for example, chemical, biological, radiological (or a combination of these threats). Further, compared to other prior art decontamination formulations, the compositions as described herein do not employ aggressive chemicals that are corrosive and could damage the surfaces to which the decontamination formulation is applied. Removal of the spent decontamination composition is also easy with minimal or no damaging of the surfaces by physical or mechanical means. Further, compared to some prior art methods, the composition described herein do not generate large volumes of waste and/or dust.

### Experimental and Results

### 1. Decontamination Formulation Components and Test Surface Materials

### 1.1 Chemicals:

Cesium chloride (99.999% CsCl, CAS 7647-17-8), cobalt nitrate hexahydrate (98% Co(NO₃)₂·6H₂O, CAS 10026-22-9), nitrilotriacetate (98%+C₆H₉NO₆, CAS 139-13-9), trisodium citrate (99%+ Na₃C₆H₅O₇ · 2H₂O, CAS 6132-04-3), potassium hexacyanoferrate(III) (99.0%, K₃Fe(CN)₆, CAS 13746-66-2), ammonium nitrate (98%, NH₃NO₄ CAS 6484-52-2). No additional purification was performed.

### 1.2 Test Coupons:

Construction materials used as surfaces for decontamination were six-year-old concrete, mosaic marble tiles, anodized aluminum and steel painted with gloss black Tremclad® paint. Three different sizes of coupon were used in experiments.

For bench scale non-radioactive tests, the size of coupons was 5 x 5 cm, while 3 x 3 cm for radioactive material. The thickness of the anodized aluminum and painted steel coupons were 0.3 cm whereas for concrete and marble it was 1cm.

For large-scale demonstration tests, the size of coupons was 15 x 15 cm. The thickness of the anodized aluminum coupon was 0.3 cm whereas for concrete it was 4 cm.

### 2. Test Procedures using Decontamination Liquids.

### 2.1 Decontamination studies with non-radioactive cesium and cobalt

### 2.1.1 Preparation of coupon contamination

Individual solutions containing 1000 mg/L of cesium and cobalt were prepared and used as contamination/spiking solutions. 20 spots of 1 µL each were placed on the upper surface of 5x5 cm of each test coupon. The total amount of contaminant on each test coupon was 20 µg. The spiked coupons were left for at least 24 hours to dry before subjecting them to decontamination.

### 2.1.2 Formulation/Decontaminant Preparation

A. In a 1 L volumetric flask, add each of:
   - 2.52 g ammonium nitrate,
   - 2.52 g potassium hexacyanoferrate,
   - 2.52 g trisodium citrate,
   - 1.80 g of nitrilotriacetic acid
   - add distilled/deionized water to 500 mL.
B. Make up to 1 litre with deionized water and mix to dissolve.
This solution is preferably kept at room temperature for no longer than one week. If desired, the individual solid components can be combined in advance.

### 2.1.3 Decontamination Procedure

Each coupon was placed on a 45° angle in a decontamination jig. 10 mL of decontamination solution was applied on the surface of the contaminated coupon. After thirty minutes, the coupons were rinsed with 100 mL of deionized water. The runoff from each coupon was collected and the amount of contaminant removed was determined using Inductively Coupled Plasma Mass Spectrometry (ICP-MS). This value was then compared to the initial amount placed on the surface to calculate the percentage removal.

### 2.1.4 Analytical Procedure for Tests on Non-radioactive Isotopes

The non-radioactive cesium, cobalt, and strontium aqueous samples after ashing and filtering were analyzed in a fully quantitative analytical method on Thermo X Series II ICP-MS in standard mode. An internal standard of 100 ppb rhodium in 4% hydrochloric acid was used to monitor the analysis. The instrument was calibrated by 0.1 and 1 ppm Cs, Co, and Sr standard solutions before running samples and checked by the same solutions after running samples. Each sample was analyzed 3 times and an average was taken.

### 2.2 Decontamination studies with radioactive Cs-134 and Co-60

The SLOWPOKE-2 nuclear reactor was used for neutron activation. Energy and efficiency calibrations of the detector were performed using a multi-nuclide y emitting radio-isotope source. Gamma-spectroscopy analysis was performed on an ORTEC GMX high-purity germanium detector.

### 2.2.1 Preparation of Contaminating/Spiking Solutions

Non-radioactive (cesium chloride (99.999% CsCl) and cobalt nitrate hexahydrate (98% Co(NO₃)₂·6 H₂O)) salts were irradiated. A radioactive cesium solution was prepared by irradiating the salt in the SLOWPOKE-2 reactor and then dissolving it in methanol. A mass of 12.08 mg solid CsCl (9.54 mg Cs) was irradiated for 24 hours at 5x10¹¹ n·cm⁻²·s⁻¹ flux. Short-lived isotopes, such as chlorides, were allowed to decay, and the activity was measured to be 0.94 MBq. 9.5 mL of methanol was added to dissolve the salt. The resulting solution was used for all of the tests involving ¹³⁴Cs. Radioactive cobalt was prepared by directly irradiating a cobalt-containing methanol solution. 44.2 mg Co(NO₃)₂·6 H₂O (8.77 mg Co based on manufacturer's label of 98% purity) was dissolved in methanol (total mass 2.0 g). After seven hours of irradiation in the SLOWPOKE-2 reactor the solution was centrifuged and decanted to obtain a clear solution with an activity 0.15 MBq.

### 2.2.2 Contamination/Spiking of Coupons

The coupons used for radiological studies had dimensions of 3 × 3 × (0.3-1) cm. The thickness of the anodized aluminum and painted steel coupons were 0.3 cm whereas for concrete and marble it was 1cm. The coupons were spiked by evenly applying ten 1-µL aliquots of the spiking solution on their upper surface of 3 × 3 cm. The coupons were then allowed to dry for at least 24 hours before the initial reading was taken.

### 2.2.3 Decontamination Procedure

The decontamination procedure comprised the following steps performed for each of the tests. The procedure was carried out with coupons placed in jigs with a containment tray so that decontamination runoff could be collected.
- Coupons were placed at a 45° angle on a decontamination jig.
- 10 ml decontamination solution was applied evenly to each coupon surface using plastic syringes and left for 30 minutes.
- The coupons were then rinsed with 50 mL of deionized water using plastic syringe.
- The decontaminated coupons were left overnight to dry before activity was measured.

### 2.2.4 Analytical Procedure for Tests on Radioactive Isotopes

The γ-spectroscopy analysis of coupons was performed on an ORTEC GMX high-purity germanium detector. Prior to measurements, energy and efficiency calibration of the detector was performed using a certified geometry-specific multi-nuclide y emitting radio-isotope source. The calibration source contained 11 radionuclides and was used to calibrate the detector over the range of 46.5-1810 keV. After calibration, a geometry-specific blank sample was counted, to ensure that the instrument dead time was below 1 %. For the analyses, coupons were packed into polyethylene Petri-dishes of a 4.5-cm inner diameter, to avoid detector contamination. Appropriately sized O-rings were used as spacers to position the coupons in the center of the Petri-dishes. Samples were placed on the detector and y spectra were recorded. Live-time counting was performed to ensure that the detection error would be below 2%. Spectra were recorded and analyzed using ORTEC 6.02 software for the integration of energy-specific peaks for particular isotopes.

### 3. Test Procedures using Decontamination Foams

### 3.1 Prior Art Surface Decontamination Foam (SDF™)

Surface decontamination Foam (SDF™) available from Allen Vanguard is a decontamination formulation known in the art for chemical and biological agents and may have blast mitigation applications. A derivative of the Canadian Aqueous System for Chemical/Biological Agent Decontamination (CASCAD™) decontamination solution, SDF™ has been designed so that it can be used for an extended period of time and in a wide range of field environments. SDF™ is a chemical solution, dispensed as foam or a liquid, which destroys a variety of known military chemical and biological agents and holds radiological particles in suspension. SDF™ can be used with a variety of types of dispersion equipment.

### 3.2 Components of SDF™

a) Primary Agent Component comprises by weight:
   - 70-100% Dichloroisocyanuric acid, sodium salt in powder or aqueous form
b) Buffer Component System (in solid/powder form or aqueous solution) comprises by weight:
   - Sodium tetraborate 10-30%,
   - Sodium hydroxide 1-5%,
   - Sodium carbonate 40-65%,
c) Surfactant Component System (formulated as individual components only or in aqueous solution (by weight))
   - Sodium myristeth sulphate 10-30%,
   - Sodium C14-C16 Olefin sulfonate 10-30%,
   - Ethanol denatured 3-9%,
   - C10-16 Alcohols 5-10%,
   - Sodium sulphate 3-7%,
   - Sodium xylene sulphonate 1-5% and
   - proprietary mixture of sodium and ammonium salts with water and co-solvent > 9%

### 3.3 Universal Surface Decontamination Formulations (USDF)

Universal Surface Decontamination Formulation (USDF) is based on composition of SDF but also has radionuclide sequestering agents added to it. This is to enhance radiological/nuclear decontamination effectiveness. This will make the formulation universal capable of dealing with all three threats, i.e., chemical, biological, and radiological agents.

### 3.4 Preparation of Surface Decontamination Formulation (SDF™) and Universal Surface Decontamination Formulations (USDF)

### 3.4.1 Preparation of SDF:

### Step1:

In a 50 mL graduated cylinder;
Add 1.8 grams of Buffer Component System (see section 3.2),
Add 4.5 mL of Surfactant Component System (see section 3.2),
Add distilled water to 50 mL, Mix until dissolved;

### Step 2:

Place 40 mL water in a second beaker or cylinder,
Add 7.8 grams of Primary Agent Component (see section 3.2),
Add water to 50 mL, Mix until dissolved,

### Step 3:

Measure out 50 mL of water.

Immediately prior to testing, combine all solutions obtained from steps 1 to 3 to yield 150 mL total volume and place in a Waring Blender (Commercial Waring Blender (Model 31BL92) with impeller (AV # PN4118675)) or other appropriate mixing device.

Mix for 7-10 seconds in the blender on high speed to produce foam (foam will essentially fill a standard size mixing bowl). Apply immediately 5 ml of resulting foam to each test coupon.

### 3.4.2 Preparation of Stock and Universal Surface Decontamination Formulations (USDF):

### 3.4.2.1 Stock Formulation Preparation

A. In a 1 L volumetric flask, add each of:
   - 2.52 g ammonium nitrate (NH₃NO₄ CAS 6484-52-2),
   - 2.52 g potassium hexacyanoferrate (K₃Fe(CN)₆, CAS 13746-66-2),
   - 2.52 g trisodium citrate (Na₃C₆H₅O₇·2H₂O, CAS 6132-04-3),
   - 1.80 g of nitrilotriacetic acid (C₆H₉NO₆, CAS 139-13-9)
   - add distilled/deionized water to 500 mL.
B. Make up to 1 litre with deionised water and mix to dissolve.
This stock solution is preferably kept at room temperature for no longer than one week. If desired, the individual solid components can be combined in advance.

### 3.4.2.2 Preparation of Universal Surface Decontamination Foam (USDF)

### Step1:

In a 50 mL graduated cylinder;
Add 1.8 grams of Buffer Component System (see section 3.2),
Add 4.5 mL of Surfactant Component System (see section 3.2);
Add distilled water to the 50 mL; mix until dissolved;

### Step 2:

Place 40 mL water in a second beaker or cylinder
Add 7.8 grams of Primary Agent Component (see section 3.2)
Add water to 50 mL, Mix until dissolved

### Step 3:

Measure 50 mL of the Stock Formulation Solution. (Refer to section 3.3.2.1).

Once ready to test, combine solutions prepared from steps 1, 2 and 3 to yield 150 mL total volume and place in a Waring Blender or other appropriate mixing device Mix for 7-10 seconds in the Waring Blender on high speed; foam will essentially fill the mixing bowl, and;
Immediately apply 5 ml of resulting foam to each test coupons if testing.

### 3.4.3 Decontamination of Coupons contaminated with non-radioactive cesium, cobalt and strontium

### 3.4.3.1 Preparation of Test Coupons

Individual solutions containing 1000 mg/L of cesium, cobalt and strontium were prepared and used as contamination/spiking solutions. 20 spots of 1 µL each were placed on each 5 x 5 cm test coupon. The total amount of contaminant on each test coupon was 20 µg. The spiked coupons were left for at least 24 hours to dry before subjecting them to decontamination.

### 3.4.3.2 Coupon Decontamination Procedure

Each coupon was placed on a 45° angle in a decontamination jig. 10 mL of decontamination solution or foam was placed on the surface of the 5x5 cm coupon. After thirty minutes, the coupons were rinsed with 100 mL of deionized water. The runoff from each coupon was collected and the amount of contaminant removed was determined. This value was then compared to the initial amount placed on the surface to calculate the percentage removal.

### 3.5 Decontamination of Coupons Contaminated with Radioactive Material

### 3.5.1 Preparation of Radioactive Test Coupons

The coupons used for radiological studies had dimensions of 3 × 3 × (0.3-1) cm. They were spiked by evenly applying ten 1 µL aliquots of the irradiated spiking solutions of cesium or cobalt on their upper surface of 3 × 3 cm. The coupons were then allowed to dry for 1 to 2 weeks before the initial reading was taken.

### 3.5.2 Coupon Decontamination Procedure

The decontamination procedure comprised the following steps, performed in triplicate for each of the tests. The procedure was carried out with the jigs placed in a containment tray so that the decontamination runoff could be collected.
1. The coupons were placed at a 45° angle on a decontamination jig.
2. An amount of 5 mL of the decontamination composition (foam or liquid, depending on the formulation) was applied evenly to each surface.
3. The decontamination composition was allowed to sit for 30 minutes.
4. After 30 minutes, the coupons were rinsed with 50 mL of deionized water.

### 4. Large-Scale Decontamination of Concrete and Anodized Aluminum

### 4.1 Reagent Preparation

### 4.1.1 Reagent A: for use in USDF Formulation:

In a 1 L volumetric flask, add each of:
- 2.66 g ammonium nitrate (NH₃NO₄ CAS 6484-52-2),
- 2.66 g potassium hexacyanoferrate (K₃Fe(CN)₆, CAS 13746-66-2),
- 2.66 g trisodium citrate (Na₃C₆H₅O₇·2H₂O, CAS 6132-04-3),
- 1.90 g nitrilotriacetic acid (C₆H₉NO₆, CAS 139-13-9) to approximately Bring to approximately 500 mL with deionised water. Stopper and shake to dissolve. Make up to1 litre with deionised water.
The solution can be kept at room temperature for one week.

### 4.1.2 Reagent B: As rinse solution for use after two applications of USDF

In a 1 L volumetric flask, add each of:
- 2.52 g ammonium nitrate (NH₃NO₄ CAS 6484-52-2),
- 2.52 g potassium hexacyanoferrate (K₃Fe(CN)₆, CAS 13746-66-2),
- 2.52 g trisodium citrate (Na₃C₆H₅O₇·2H₂O, CAS 6132-04-3),
- 1.80 g of nitrilotriacetic acid (C₆H₉NO₆, CAS 139-13-9),
Bring to approximately 500 mL with deionised water. Stopper and shake to dissolve. Make up to 1 litre with deionised water.
The solution can be kept at room temperature for one week.

### 4.2 Test/Application Procedure:

### 4.2.1 For USDF Technology

1. Combine the following components into the mixing vessel of the air trolley:
   a. 6.6 L water,
   b. 485 g Primary Agent Component, (Refer to section 3.2 (a))
   c. 110 g Buffer Component System. (Refer to section 3.2 (b))
2. Stir until all particulates have dissolved.
3. Add 2 X 950 mL bottles of Surfactant Component System (Refer to section 3.2 (c))
4. Add 1 L of Reagent A
5. Pressurize the mixing vessel.
6. From a distance of approximately 10 ft, evenly spray 1/3 of the foam (approximately 3 L of contents in applicator) on the wall making sure to cover all coupons and surfaces. The entire contents of the applicator will expand to produce foam that is approximately 30 L.
7. Allow the foam to stay on the wall for 30 minutes.
8. When the time has elapsed, vacuum to retrieve the foam.
9. Using an agricultural mist sprayer, rinses the surface by evenly distribute water across the wall working from the top to the bottom so that all of the foam is removed from the wall.
10. Vacuum the surface.
2. Repeat steps 6-10, for a total of 2 passes.
3. Rinse the surface with Reagent B and wait for 30 minutes
4. Rinse surface with water
5. Vacuum the surface

### 4.2.2 Evaluation of USDF

Regardless of surface type USDF was applied to the coupons in the same way. Nine coupons placed on the 3 meter (m) by 3 m test wall (eight contaminated and one cross contamination blank) were decontaminated at one time. The application of USDF was performed using a foamer (Concealed Backpack Foamer, Allen-Vanguard, Ottawa, ON, Canada) following instructions provided by Allen-Vanguard. The application included loading the foamer with liquid foam (constituents given in the instructions), pressurization of the foamer to 2,500 pounds per square inch (psi) with compressed carbon dioxide, and application of the foam to the surface coupons so the coupons were completely covered. The foam was allowed to reside on the surface for 30 minutes and then the foam (and water rinse) was removed using a vacuum (6.5 horsepower, ShopVac® QSP® Quiet Deluxe®, Williamsport, PA) mounted on top of a 65 gallon vacuum collection reservoir (1065-YE Poly Over Pak® 65, Enpac, Eastlake, OH) containing a defoaming reagent to diminish the volume of the foam when vacuumed. The defoaming reagent was recirculated from the collection reservoir into the vacuum wand so the foam would not clog the vacuum hose. The last step involved rinsing the surface of each coupon with deionized water using a handheld sprayer (Model 1125D Wood and Masonry Sprayer, Root-Lowell Flo Master®, Lowell, MI) and then vacuuming again.

Following the two foam applications, rinses, and removals, another reagent (referred to as Reagent B) was applied to the surfaces using the handheld sprayer. This reagent had the consistency of water with a light yellow color. After application using the handheld sprayer, the Reagent B was left on the surfaces for 30 minutes and then the surfaces were rinsed with distilled water and vacuumed.

### 5. Chemical and Biological Decontamination Tests

The SDF and USDF compositions were also tested for their abilities to decontaminate chemical warfare agents and biological agents.

### 5.1 Test Procedure for Chemical Warfare Agents

The decontamination procedure utilized was **NATO/PFP ANNEX C STANAG 4360**, which is the standardized testing methodology for evaluating the decontamination efficacy of chemical warfare agents.

### 5.2 Test Procedure for Biological Agents

| Biological Agent | Test Method |
|---|---|
| a) ***Staphylococcus aureus*** | AOAC Use-Dilution Official Test Method 955.15 |
| b) ***Pseudomonas aeruginosa*** | AOAC Use-Dilution Official Test Method 964.02 |
| c) ***Salmonella enterica*** | AOAC Use-Dilution Official Test Method 955.14 |
| d) ***Trichophyton mentagrophytes*** | AOAC Use Dilution Test modified for fungi as per EPA's new 810 guidelines |
| e) **Human Influenza A Virus (H1N1)** | "Standard Test Method for Efficacy of Virucidal Agents Intended for Inanimate Environmental Surfaces" |
| | ASTM standard E1053-97 (Reapproved 2002) |
| | |
| f) ***Feline calicivirus* (Surrogate for Human norovirus)** | "Standard Test Method for Efficacy of Virucidal Agents Intended for Inanimate Environmental Surfaces" |
| | ASTM standard E1053-97 (Reapproved 2002) |

### 6. Results

### (Example 1)

### 6.1 Decontamination tests with non-radioactive material

### 6.1.1 Decontamination tests with salts in water

Table 1 and 2 summarizes decontamination efficiency of the decontamination composition in water for the removal of non-radioactive cesium and cobalt from various surface materials.

**Table 1: Removal of cesium (non-radioactive) from building materials using formulation salts in water (ammonium nitrate, potassium hexacyanoferrate, trisodium citrate and nitrilotriacetic acid)**

| **Surface Material** | **% Removal of Cesium** |
|---|---|
| **Concrete** | **43.5** |
| **Marble** | **66.4** |
| **Painted Steel** | **92.4** |
| **Anodized Aluminum** | **94.2** |

**Table 2: Removal of cobalt (non-radioactive) from building materials using formulation salts in water (ammonium nitrate, potassium hexacyanoferrate, trisodium citrate and nitrilotriacetic acid)**

| **Surface Material** | **% Removal of Cobalt** |
|---|---|
| **Concrete** | **53.6** |
| **Marble** | **56.8** |
| **Painted Steel** | **94.7** |
| **Anodized Aluminum** | **94.1** |

### 6.1.2 Decontamination tests with USDF

The results of testing decontamination compositions comprising varying amounts of ammonium nitrate, potassium hexacyanoferrate, trisodium citrate and nitrilotriacetic acid are shown in Tables 3 and 4.

**Table 3.Decontamination of concrete from cesium, cobalt and strontium using original SDF, USDF with various concentrations of salts (ammonium nitrate, potassium hexacyanoferrate, trisodium citrate and nitrilotriacetic acid in SDF)**

| **Decontaminants** | **% Removal** | | |
|---|---|---|---|
| | **Cesium** | **Cobalt** | **Strontium** |
| **SDF original** | 19.2 | 17.3 | 14.4 |
| **USDF (contains 0.00025% of each salt)** | 19.8 | 19.9 | 15.8 |
| **USDF (contains 0.0025% of each salt)** | 21.1 | 22.3 | 24.7 |
| **USDF (contains 0.025% of each salt))** | 24.7 | 24.1 | 30.6 |
| **USDF (contains 0.25% of each salt)** | 31.7 | 26.9 | 38.6 |

**Table 4. Decontamination of painted steel from cesium, cobalt and strontium using original SDF, USDF with various concentrations of salts**

| **Decontaminants** | **% Removal** | | |
|---|---|---|---|
| | **Cesium** | **Cobalt** | **Strontium** |
| **SDF original** | 81.5 | 75.8 | 71.2 |
| USDF (contains 0.0025% of each salt) | 82.7 | 79.3 | 79.3 |
| USDF (contains 0.025% of each salt)) | 83.8 | 85.5 | 91.2 |
| USDF (contains 0.25% of each salt) | 93.5 | 96.9 | 99.5 |

The results shown in Tables 3 and 4 suggest that various concentrations of ammonium nitrate, potassium hexacyanoferrate, trisodium citrate and nitrilotriacetic acid in SDF formulations can be employed as decontamination compositions and provide improved results over SDF alone.

Additional tests were completed to determine the effect of single salt additives to SDF formulations. The results of tests are shown in Tables 5 and 6.

**Table 5.Decontamination of concrete from cesium using addition of individual salts to SDF (A: Ammonium salt, B: Hexacyanoferrate C: nitrilotriacetic acid D: trisodium citrate)**

| **SDF with various salt combinations** | **% Removal of Cesium** |
|---|---|
| **SDF original** | 19.2 |
| **SDF + A** | 21.6 |
| **SDF + B** | 27.2 |
| **SDF + A + B** | 31.9 |
| **USDF (SDF+ A + B + C + D)** | 31.7 |

**Table 6. Decontamination of cobalt and strontium from concrete using addition of individual salts to SDF (A: Ammonium salt, B: Hexacyanoferrate C: nitrilotriacetic acid D: trisodium citrate)**

| **SDF with various salt combinations** | **% Removal** | |
|---|---|---|
| | **Cobalt** | **Strontium** |
| **SDF original** | 15.1 | 15.1 |
| **SDF + C** | 20.3 | 26.8 |
| **SDF + D** | NA | 22.6 |
| **SDF + C + D** | 23.8 | 37.7 |
| **USDF (SDF + C + D + A + B)** | 25.0 | 38.0 |

The salts were selected on the basis of their effectiveness towards target contaminants. Ammonium nitrate and potassium hexacyanoferrate are effective on cesium, while nitrilotriacetic acid and trisodium citrate are effective on cobalt and strontium.

The results suggest that independent addition of ammonium salt, hexacyanoferrate, nitrilotriacetic acid or trisodium citrate to surface decontamination foam known in the art produces a formulation that exhibits improved decontamination results and that the addition of more of these components generally provides even better decontamination results than when a single component is employed.

Table 7-9 shows the decontamination efficiencies of SDF and USDF on non-radioactive isotopes. USDF exhibits better removal in comparison with original SDF.

**Table 7: Removal of Cesium (non-radioactive) from surfaces using SDF and USDF**

| **Surface Material** | **% Removal of cesium** | |
|---|---|---|
| | **SDF** | **USDF** |
| **Concrete** | 19.2 | 31.7 |
| **Marble** | 26.8 | 58.5 |
| **Painted Steel** | 81.5 | 93.5 |
| **Anodized Aluminum** | 89.2 | 96.6 |

**Table 8: Removal of Cobalt (non-radioactive) from surfaces using SDF and USDF**

| **Surface Material** | **% Removal of cobalt** | |
|---|---|---|
| | **SDF** | **USDF** |
| **Concrete** | 17.3 | 26.9 |
| **Marble** | 24.2 | 52.5 |
| **Painted Steel** | 75.8 | 96.9 |
| **Anodized Aluminum** | 72.2 | 92.1 |

**Table 9: Removal of Strontium (non-radioactive) from concrete using SDF and USDF**

| **Surface Material** | **% Removal of strontium** | |
|---|---|---|
| | **SDF** | **USDF** |
| **Concrete** | 14.4 | 38.6 |
| **Marble** | 23.7 | 46.4 |
| **Painted Steel** | 71.2 | 99.5 |
| **Anodized Aluminum** | 64.0 | 91.1 |

### (Example 2)

### 6.2 Decontamination Tests on Radioactive Material

### 6.2.1 Decontamination tests using formulation components in water

Tables 10 and 11 summarize decontamination efficiency of the decontamination composition in water for the removal of radio active cesium and cobalt from various surface materials.

**Table 10: Removal of radioactive cesium-134 from building materials using formulation components in water**

| **Surface Material** | **% Removal of Cesium-134** |
|---|---|
| **Concrete** | **48.0** |
| **Marble** | **67.0** |
| **Painted Steel** | **99.1** |
| **Anodized Aluminum** | **98.7** |

**Table 11: Removal of radioactive cobalt-60 from building materials using formulation components in water**

| **Surface Material** | **% Removal of Cobalt-60** |
|---|---|
| **Concrete** | **52.9** |
| **Marble** | **61.5** |
| **Painted Steel** | **95.8** |
| **Anodized Aluminum** | **97.8** |

### 6.2.1 Decontamination tests using SDF and USDF

Tables 12-14 summarize decontamination efficiency of original SDF and USDF for the removal of radio active cesium, cobalt and strontium from various surface materials.

**Table 12: Removal of radioactive Cesium-134 from surfaces using original SDF and USDF**

| **Surface Material** | **% Removal of Cesium-134** | |
|---|---|---|
| | **SDF** | **USDF** |
| **Concrete** | 20.1 | 34.8 |
| **Marble** | 24.3 | 52.0 |
| **Painted Steel** | 80.5 | 88.4 |
| **Anodized Aluminum** | 96.9 | 99.0 |

**Table 13: Removal of radioactive Cobalt-60 from surfaces using SDF and USDF**

| **Surface Material** | **% Removal of Cobalt-60** | |
|---|---|---|
| | **SDF** | **USDF** |
| **Concrete** | 8.6 | 24.6 |
| **Marble** | 24.3 | 51.7 |
| **Painted Steel** | 75.6 | 96.2 |
| **Anodized Aluminum** | 81.2 | 92.2 |

**Table 14: Removal of radioactive Strontium-85 from surfaces using SDF and USDF**

| **Surface Material** | **% Strontium-85** | |
|---|---|---|
| | **SDF** | **USDF** |
| **Concrete** | 14.4 | 41.0 |

### (Example 3)

### 6.3 Pilot/Large Scale Decontamination tests on radioactive Cs-137

Table 15 summarizes the decontamination efficiency of USDF on concrete and anodized aluminum when tested on pilot/large scale using cesium-137.

**Table 15: Pilot /Large scale testing for the decontamination of radioactive Cs-137 from Concrete and Anodized Aluminum using Universal Surface Decontamination Foam (USDF)**

| **Surface Material** | **% Removal of Cesium-137** |
|---|---|
| **Concrete** | **62.0** |
| **Anodized Aluminum** | **92.0** |

### (Example 4)

### 7. Chemical and Biological Decontamination Test Results

**Table 16: Decontamination of Chemical Warfare Agents (CWA) with SDF and USDF**

| **Agent** | **% Decontamination** | | | | | | | |
|---|---|---|---|---|---|---|---|---|
| | **Painted Drywall** | | **Ceramic Tile** | | **Painted Steel** | | **Anodized Aluminum** | |
| | **SDF** | **USDF** | **SDF** | **USDF** | **SDF** | **USDF** | **SDF** | **USDF** |
| **HD Sulfur Mustard** | 98.5 | 95.6 | 100 | 99.8 | 95.2 | 94.6 | 100 | 100 |
| **GD Soman** | 88.8 | 76.1 | 99.6 | 99.6 | 85.3 | 86.7 | 100 | 100 |
| **GF Nerve Agent** | 86.7 | 93.2 | 98.5 | 100 | 83.7 | 85.7 | 100 | 100 |
| **VX V Series Nerve Agent** | 81.4 | 98.3 | 100 | 100 | 64.0 | 58.1 | 100 | 100 |

The results shown in Table 16 suggest that the universal surface decontamination formulations are effective compositions for decontamination of a variety of chemical warfare agents. The results also confirm that the added compounds are compatible with original SDF formulation and did not significantly inhibit its chemical and biological decontamination capabilities. The results of testing the decontamination compositions on biological agents are provided in Table 17.

**Table 17: Decontamination of Biological Agents using SDF and USDF (Results are expressed as Number of Tubes Exhibiting Growth/ Total Number of Tubes)**

| **Agents** | **SDF** | **USDF** |
|---|---|---|
| ***Staphylococcus aureus*** | 0/60 | 0/60 |
| ***Pseudomonas aeruginosa*** | 0/60 | 0/60 |
| ***Salmonella enterica*** | 0/60 | 0/60 |
| ***Trichophyton mentagrophytes*** | 0/10 | 0/10 |
| **Human Influenza A Virus (H1N1)** | Inactivation of challenge virus and no cytotoxicity at various dilutions | Inactivation of challenge virus and no cytotoxicity at various dilutions |
| ***Feline calicivirus* (Surrogate for Human norovirus)** | Inactivation of challenge virus and no cytotoxicity at various dilutions | Inactivation of challenge virus and no cytotoxicity at various dilutions |

The results shown in Table 17 suggest that the universal decontamination composition is an effective composition for decontamination of a variety of biological agents.

The present invention has been described with regard to one or more embodiments. However, it will be apparent to persons skilled in the art that a number of variations and modifications can be made without departing from the scope of the the claims.

## Claims

1. A decontamination composition comprising an ammonium compound, a ferric/ferrocyanide compound, a polyaminocarboxylic acid compound, a polycarboxylic compound and water; wherein the ammonium compound is ammonium nitrate present in an amount of 0.0001-15% by weight, the ferricyanide/ferrocyanide compound is potassium ferricyanide present in an amount of 0.0001% to 15% by weight, the polyaminocarboxylic acid compound is nitrilotriacetate present in an amount of 0.0001% to 20% by weight, and the polycarboxylic acid compound is a sodium citrate present in an amount of 0.0001% to 20% by weight, and wherein the decontamination composition is a formulation for use as a foam.

2. The decontamination compound of claim 1, comprising a further oxidizing agent.

3. The decontamination compound of claim 1, further comprising an isocyanuric acid.

4. The decontamination compound of claim 3, where in the isocyanuric acid compound is dichloroisocyanuric acid.

5. The decontamination composition of claim 1, wherein the composition comprises one or more surfactants.

6. The decontamination composition of claim 1, wherein the composition comprises one or more compounds that result in an alkaline buffer.

7. The decontamination composition of claim 1, wherein the composition further comprises a propylene glycol, polyethylene glycol, derivative of propylene glycol, derivatives of polyethylene glycol or a combination thereof.

8. A kit comprising,
a) the decontamination composition of claim 1, and;
b) one or more mixers, pumps, hoses, containers, nozzles, and aerators.

## Patentansprüche

1. Dekontaminierungszusammensetzung, umfassend eine Ammoniumverbindung, eine Eisen(III)/Ferrocyanid-Verbindung, eine Polyaminocarbonsäureverbindung, eine Polycarbonsäureverbindung und Wasser; wobei die Ammoniumverbindung Ammoniumnitrat ist, das in einer Menge von 0,0001-15 Gew.-% vorhanden ist, die Ferricyanid/Ferrocyanid-Verbindung Kaliumferricyanid ist, das in einer Menge von 0,0001 Gew.-% bis 15 Gew.-% vorhanden ist, die Polyaminocarbonsäureverbindung Nitrilotriacetat ist, das in einer Menge von 0,0001 Gew.-% bis 20 Gew.-% vorhanden ist, und die Polycarbonsäureverbindung ein Natriumcitrat ist, das in einer Menge von 0,0001 Gew.-% bis 20 Gew.-% vorhanden ist, und wobei die Dekontaminierungszusammensetzung eine Formulierung zur Verwendung als Schaum ist.

2. Dekontaminierungsverbindung nach Anspruch 1, die ein weiteres Oxidationsmittel umfasst.

3. Dekontaminierungsverbindung nach Anspruch 1, die weiter eine Isocyanursäure umfasst.

4. Dekontaminierungsverbindung nach Anspruch 3, wobei in der Isocyanursäureverbindung Dichlorisocyanursäure enthalten ist.

5. Dekontaminierungszusammensetzung nach Anspruch 1, wobei die Zusammensetzung ein oder mehrere Tenside umfasst.

6. Dekontaminierungszusammensetzung nach Anspruch 1, wobei die Zusammensetzung eine oder mehrere Verbindungen umfasst, die zu einem alkalischen Puffer führen.

7. Dekontaminierungszusammensetzung nach Anspruch 1, wobei die Zusammensetzung weiter ein Propylenglykol, Polyethylenglykol, Derivat von Propylenglykol, Derivate von Polyethylenglykol oder eine Kombination davon umfasst.

8. Kit umfassend,
a) die Dekontaminierungszusammensetzung von Anspruch 1, und;
b) einen oder mehrere Mischer, Pumpen, Schläuche, Behälter, Düsen und Belüfter.

## Revendications

1. Composition de décontamination comprenant un composé d'ammonium, un composé ferrique/de ferrocyanure, un composé d'acide polyaminocarboxylique, un composé polycarboxylique et de l'eau ; dans laquelle le composé d'ammonium est du nitrate d'ammonium présent dans une quantité de 0,0001 à 15 % en poids, le composé de ferricyanure/ferrocyanure est du ferricyanure de potassium présent dans une quantité de 0,0001 % à 15 % en poids, le composé d'acide polyaminocarboxylique est du nitrilotriacétate présent dans une quantité de 0,0001 % à 20 % en poids, et le composé d'acide polycarboxylique est un citrate de sodium présent dans une quantité de 0,0001 % à 20 % en poids, et dans laquelle la composition de décontamination est une formulation pour une utilisation comme une mousse.

2. Composé de décontamination selon la revendication 1, comprenant un autre agent oxydant.

3. Composé de décontamination selon la revendication 1, comprenant en outre un acide isocyanurique.

4. Composé de décontamination selon la revendication 3, dans lequel le composé d'acide isocyanurique est de l'acide dichloroisocyanurique.

5. Composition de décontamination selon la revendication 1, dans laquelle la composition comprend un ou plusieurs tensioactifs.

6. Composition de décontamination selon la revendication 1, dans laquelle la composition comprend un ou plusieurs composés qui résultent en un tampon alcalin.

7. Composition de décontamination selon la revendication 1, dans laquelle la composition comprend en outre un propylèneglycol, un polyéthylèneglycol, un dérivé de propylèneglycol, des dérivés de polyéthylèneglycol ou une combinaison de ceux-ci.

8. Kit comprenant,
a) la composition de décontamination selon la revendication 1, et ;
b) un ou plusieurs mélangeurs, pompes, tuyaux, récipients, buses, et aérateurs.
